# EUROPEAN PATENT APPLICATION

(11) **EP 4 823 243 A1**
(43) Date of publication of application: **14.10.2026**
(21) Application number: 25188630.5
(22) Date of filing: 09.07.2025
(51) Int. Cl.: H05B 45/18, H05B 45/56

(54) **POWER CONTROL METHOD FOR LIGHT SOURCE, LIGHTING DEVICE, AND STORAGE MEDIUM**

(30) Priority: 07.04.2025 CN 202510426945
(71) Applicant: Nitelab Optoelectronics Co., Ltd., Foshan, Guangdong 528251 (CN)
(72) Inventor: LI, Wenjie, Foshan, Guangdong, 52825 (CN)
(74) Representative: KIPA AB

(57) **Abstract**

A power control method for a light source, a lighting device, and a storage medium are provided, the light source includes a central LED chip and a peripheral LED chip. The method includes: controlling the light source to operate and acquiring a temperature parameter of the lighting device in real time; when a temperature of the lighting device is less than a first temperature threshold, controlling both the central LED chip and the peripheral LED chip to operate at a first power level; when the temperature of the lighting device is greater than or equal to the first temperature threshold, controlling the central LED chip to operate at the first power level and controlling the peripheral LED chip to operate at a second power level, the first power level is greater than the second power level. The present application solves the problem where synchronously reducing operating power of all LED chips to prevent overheating of the lighting device would cause undesirable reduction in central brightness or light intensity.

## Description

### FIELD

The present application relates to the technical field of lighting technologies, in particular to a power control method for a light source, a lighting device, and a storage medium.

### BACKGROUND

Flashlights and headlamp light sources typically employ either a single LED chip or multiple LED chips to achieve different lighting requirements. Throw-type flashlights primarily rely on a single high-power-density LED chip, which provides excellent spotlight performance but limited illumination range. In contrast, flood-type lighting devices utilize multiple LED chips to deliver wider coverage, albeit with reduced throw capability.

To achieve both throw and flood lighting, some products adopt multi-LED-chip configurations. However, during power adjustment, synchronously reducing luminous power of all LED chips results in significant central brightness or luminous intensity degradation, adversely affecting user experience. Furthermore, in compact, capacity-limited lighting devices, prolonged high-power operation of LED chips tends to cause overheating, which compromises product lifespan and poses scalding risks to users.

### SUMMARY

In view of the deficiencies in the prior art described above, an object of the present application is to provide a power control method for a light source, a lighting device, and a storage medium, to solve the problem that synchronously reducing the operating power of all LED chips to prevent overheating of the lighting device results in decreased central brightness or luminous intensity.

The technical solution of the present application is as follows:

A power control method for a light source, used to control a lighting device having a light source, and the light source includes a central LED chip and a peripheral LED chip, the power control method for a light source includes steps of:
controlling the light source to operate and acquiring a temperature parameter of the lighting device in real time;
when a temperature of the lighting device is less than a first temperature threshold, controlling both the central LED chip and the peripheral LED chip to operate at a first power level;
when the temperature of the lighting device is greater than or equal to the first temperature threshold, controlling the central LED chip to operate at the first power level and controlling the peripheral LED chip to operate at a second power level, and the first power level is greater than the second power level.

Optionally, when performing a step of the acquiring the temperature parameter of the lighting device, the step further includes:
acquiring an operating mode parameter of the lighting device;
the power control method for a light source further includes steps of:
when the temperature of the lighting device is less than the first temperature threshold or when an operating mode of the lighting device is a high-power mode, controlling both the central LED chip and the peripheral LED chip to operate at the first power level.

Optionally, the power control method for a light source further includes:
when the temperature of the lighting device is greater than or equal to the first temperature threshold and the operating mode of the lighting device is the high-power mode, controlling the central LED chip to operate at the first power level and controlling the peripheral LED chip to operate at the second power level.

Optionally, when performing the step of acquiring the temperature parameter of the lighting device, the step further includes:
acquiring an operating time parameter of the lighting device;
the power control method for a light source further includes:
when the temperature of the lighting device is greater than or equal to the first temperature threshold or when an operating time of the lighting device exceeds a predetermined duration, controlling the central LED chip to operate at the first power level and controlling the peripheral LED chip to operate at the second power level.

Optionally, the power control method for a light source further includes:
when the temperature of the lighting device is less than the first temperature threshold and the operating time of the lighting device exceeds the predetermined duration, controlling both the central LED chip and the peripheral LED chip to operate at the first power level.

Optionally, the power control method for a light source further includes the steps of:
when the temperature of the lighting device is greater than or equal to the first temperature threshold, controlling the central LED chip to operate at a power level reduced by a first ratio, and controlling the peripheral LED chip to operate at a power level reduced by a second ratio, the first ratio is less than the second ratio.

The present application further provides a lighting device implementing the power control method described above, including:
a housing, forming an accommodation cavity;
the light source, disposed within the housing, the light source includes the central LED chip and the peripheral LED chip;
a temperature sensor, disposed within the housing, the temperature sensor is configured to detect the temperature of the lighting device and output a temperature detection signal;
a controller, disposed within the housing, connected to the temperature sensor, and also connected to the light source, the controller is configured to, when determining that the temperature of the lighting device is less than the first temperature threshold based on the temperature detection signal, control both the central LED chip and the peripheral LED chip to operate at the first power level; and is configured to, when determining that the temperature of the lighting device is greater than or equal to the first temperature threshold based on the temperature detection signal, control the central LED chip to operate at the first power level and control the peripheral LED chip to operate at the second power level, the first power level is greater than the second power level.

Optionally, the controller is further configured to, when determining that the temperature of the lighting device is less than the first temperature threshold based on the temperature detection signal or when receiving a high-power mode signal, control both the central LED chip and the peripheral LED chip to operate at the first power level.

Optionally, the lighting device further includes:
a timer connected to the controller, the controller is configured to, when the lighting device begins operation, control the timer to start timing; and the timer is configured to, when a timed duration reaches the predetermined time, output a timing trigger signal to the controller; and the controller is further configured to, when determining that the temperature of the lighting device is greater than or equal to the first temperature threshold according to the temperature detection signal or when receiving the timing trigger signal, control the central LED chip to operate at the first power level and control the peripheral LED chip to operate at the second power level.

The present application further provides a storage medium, the storage medium stores a power control program for a light source is executed by the controller, implements the power control method for a light source as described above.

The technical solution of the present application can control operation of the light source while acquiring the temperature parameter of the lighting device in real time. When the temperature of the lighting device is less than the first temperature threshold, both the central LED chip and peripheral LED chip are controlled to operate at the first power level. When the temperature of the lighting device greater than or equal to the first temperature threshold, the central LED chip is controlled to operation at the first power level while the peripheral LED chip is controlled to operate at the second power level, where the first power level is greater than the second power level. This solution reduces an overall power consumption of the light source by maintaining the central LED chip at the first power level while operating the peripheral LED chip at the lower second power level, thereby decreasing heat generation. Consequently, the solution maintains throw lighting intensity while reducing the overall power consumption to reduce the temperature of the lighting device.

### BRIEF DESCRIPTION OF THE DRAWINGS

To more clearly illustrate the technical solutions in the embodiments of the present application or in the prior art, the following provides a brief introduction to the drawings required for describing the embodiments or prior art. It will be apparent that the drawings in the following description represent only some embodiments of the present application. For persons of ordinary skill in the art, other drawings can be derived from these illustrated structures without creative effort.
FIG. 1 is a flowchart illustrating method steps of one embodiment of a power control method for a light source according to the present application.
FIG. 2 is a flowchart illustrating the method steps of another embodiment of the power control method for a light source according to the present application.
FIG. 3 is a flowchart illustrating the method steps of yet another embodiment of the power control method for a light source according to the present application.
FIG. 4 is a flowchart illustrating the method steps of a further embodiment of the power control method for a light source according to the present application.
FIG. 5 is a schematic diagram showing functional modules of one embodiment of the lighting device according to the present application.
FIG. 6 is a schematic diagram showing the functional modules of the light source in the lighting device according to the present application.

### DETAILED DESCRIPTION OF EMBODIMENTS

To make objectives, technical solutions, and effects of the present application clearer and more definite, the following provides a further detailed description of the present application with reference to accompanying drawings and by way of embodiments. It should be understood that the embodiments described herein are only intended to explain the present application and not to limit it.

In the embodiments and claims, unless the context clearly dictates otherwise, the articles "a," "an", "the" and "said" can include plural references. Where terms like "first", "second", etc., are used in the embodiments of the present application, such designations are for descriptive purposes only and are not to be construed as indicating relative importance or implicitly specifying the quantity of the referenced technical features. Accordingly, features qualified by terms such as "first" or "second" can explicitly or implicitly include one or more of such features.

It should be further understood that the term "comprising/including" as used in the specification of the present application indicates the presence of stated features, integers, steps, operations, elements, and/or components, but does not preclude the presence or addition of one or more other features, integers, steps, operations, elements, components, and/or groups thereof. It should be understood that when an element is referred to as being "connected" or "coupled" to another element, it can be directly connected or coupled to the other element, or intervening elements can be present. Furthermore, the terms "connected" or "coupled" as used herein can include wireless connections or wireless couplings. The term "and/or" as used herein includes any and all combinations of one or more of the associated listed items.

Those skilled in the art will appreciate that all terms (including technical and scientific terms) used herein have the same meanings as commonly understood by one of ordinary skill in the art to which this invention belongs, unless expressly defined otherwise. It should also be understood that terms defined in general dictionaries should be interpreted as having meanings consistent with their contextual meanings in the relevant art, and will not be interpreted in an idealized or overly formal sense unless specifically defined as such herein.

Furthermore, technical solutions from different embodiments can be combined, provided such combination can be implemented by a person skilled in the art. When the combination of technical solutions results in contradictions or becomes unfeasible, such combined technical solution shall be deemed non-existent and shall not fall within the scope of protection claimed by the present application.

Flashlights and headlamp light sources typically employ either a single LED chip or multiple LED chips to achieve different lighting requirements. Throw-type flashlights primarily rely on a single high-power-density LED chip, which provides excellent spotlight performance but limited illumination range. In contrast, flood-type lighting devices utilize multiple LED chips to deliver wider coverage, albeit with reduced throw capability.

To achieve both throw and flood lighting, some products adopt multi-LED-chip configurations. However, during power adjustment, synchronously reducing luminous power of all LED chips results in significant central brightness or luminous intensity degradation, adversely affecting user experience. Furthermore, in compact, capacity-limited lighting devices, prolonged high-power operation of LED chips tends to cause overheating, which compromises product lifespan and poses scalding risks to users.

To solve the aforementioned problems, the present application provides a power control method for a light source, configured to control a lighting device having the light source. The light source includes a central LED chip and a peripheral LED chip. A number of the central LED chips and the peripheral LED chips can be determined according to practical requirements and user needs. The central LED chip is primarily responsible for providing throw beam patterns with high luminous intensity and superior spotlight characteristics. The peripheral LED chip is arranged surrounding the central LED chip to provide wider illumination angles and enhanced coverage, utilizing high-efficiency LEDs to reduce power consumption. The light source can be adapted to portable lighting devices such as headlamps and flashlights, achieving both throw and flood lighting requirements within compact form factors.

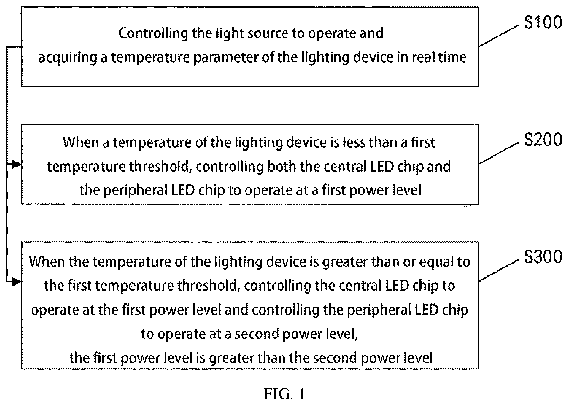

Referring to FIG. 1, in one embodiment, the power control method for a light source includes following steps:
S100: controlling the light source to operate while acquiring a temperature parameter of the lighting device in real time;
S200: when a temperature of the lighting device is less than a first temperature threshold, controlling both the central LED chip and the peripheral LED chip to operate at a first power level;
S300: when the temperature of the lighting device is greater than or equal to the first temperature threshold, controlling the central LED chip to operate at the first power level and controlling the peripheral LED chip to operate at the second power level, and the first power level is greater than the second power level.

In the present embodiment, to prevent overheating of the lighting device, the temperature parameter of the lighting device can be acquired in real time. The temperature of the lighting device can be monitored through implementation of a temperature sensor or thermistor, which collects thermal data and generates corresponding an analog signal. The analog signal is then converted into a digital signal, thereby obtaining the temperature parameter. Based on the temperature parameter, an operating power of both the central LED chip and peripheral LED chip can be regulated, for instance, by reducing power output of the LED chips when temperatures exceed safe thresholds. When the lighting device temperature is less than the first temperature threshold, both the central LED chip and the peripheral LED chip are controlled to operate at the first power level; when the temperature is greater than or equal to the first temperature threshold, controlling the central LED chip to operate at the first power level while the peripheral LED chip operate at a second power level, where the first power level is greater than the second power level. The first temperature threshold, first power level and second power level can be configured according to operational requirements and user preferences.

It should be understood that when the temperature of the lighting device is less than the first temperature threshold, a service life of electronic components in the lighting device is not affected and there is no scalding risks to users, therefore both the central LED chip and the peripheral LED chip can be controlled to operate at the relatively higher first power level. When the temperature of the lighting device is greater than or equal to the first temperature threshold, indicating conditions that can affect component lifespan and create burn hazards, power reduction is required. In the embodiment, by controlling the central LED chip to continue operating at the first power level while controlling the peripheral LED chip to operate at the lower second power level, the overall power consumption of the light source can be reduced, thereby decreasing heat generation from the light source. This approach maintains throw lighting intensity while reducing the overall power consumption, consequently reeducing the temperature of the lighting device.

During actual operation, when the throw lighting intensity remains substantially unaffected or experiences minimal impact, the operating power of the central LED chip can be reduced within a predetermined range. The predetermined range can be configured according to practical requirements and user preferences without limitation herein.

The technical solution of the present application can control operation of the light source while acquiring the temperature parameter of the lighting device in real time. When the temperature of the lighting device is less than the first temperature threshold, both the central LED chip and peripheral LED chip are controlled to operate at the first power level. When the temperature of the lighting device greater than or equal to the first temperature threshold, the central LED chip is controlled to operation at the first power level while the peripheral LED chip is controlled to operate at the second power level, where the first power level is greater than the second power level. This solution reduces an overall power consumption of the light source by maintaining the central LED chip at the first power level while operating the peripheral LED chip at the lower second power level, thereby decreasing heat generation. Consequently, the solution maintains throw lighting intensity while reducing the overall power consumption to reduce the temperature of the lighting device.

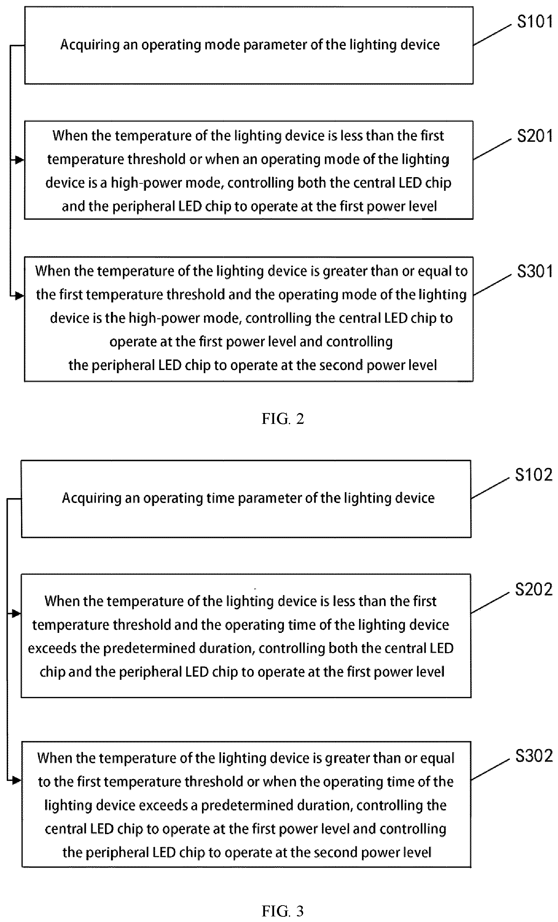

Referring to FIG. 2, in one embodiment, when performing a step of acquiring temperature parameter of the lighting device, the step further includes:
S101: acquiring an operating mode parameter of the lighting device;
the power control method for a light source further includes the steps of:
S201: when the temperature of the lighting device is less than the first temperature threshold or when an operating mode of the lighting device is a high-power mode, controlling both the central LED chip and the peripheral LED chip to operate at the first power level.

In the present embodiment, the operating mode parameter of the lighting device can also be acquired, and then the central LED chip and the peripheral LED chip can be controlled to operate according to the temperature parameter and the operating mode parameter. The operating mode can be manually switched by users or automatically switched by a predetermined program, then a corresponding operating mode signal can be read to determine a current operating mode of the lighting device. When the temperature of the lighting device is less than the first temperature threshold or when the lighting device operates in the high-power mode, both the central LED chip and the peripheral LED chip can be controlled to operate at the first power level. It should be understood that when the temperature of the lighting device is less than the first temperature threshold, the service life of electronic components in the lighting device will not be affected, nor will there be scalding risks to users, therefore both the central LED chip and the peripheral LED chip can be controlled to operate at the relatively high first power level. In the high-power mode, both the central LED chip and the peripheral LED chip need to be controlled to operate at the relatively high first power level. In the embodiment, both the central LED chip and the peripheral LED chip can be controlled to operate at the relatively high first power level under two conditions, which can increase application scope and flexibility of the lighting device.

Referring to FIG. 2, in one embodiment, the power control method for a light source further includes the steps of:
S301: when the temperature of the lighting device is greater than or equal to the first temperature threshold and the operating mode of the lighting device is the high-power mode, controlling the central LED chip to operate at the first power level and controlling the peripheral LED chip to operate at the second power level.

In the present embodiment, since overheating of the lighting device can affect product lifespan and pose scalding risks to users, a control priority based on the temperature parameter is higher than that based on the operating mode parameter. Therefore, when the temperature of the lighting device is greater than or equal to the first temperature threshold and the lighting device operates in the high-power mode, the central LED chip is controlled to operate at the first power level while the peripheral LED chip is controlled to operate at the second power level, thereby reducing the overall power consumption of the light source and preventing further temperature increase of the lighting device.

Referring to FIG. 3, in one embodiment, the steps of acquiring the temperature information of the lighting device further includes:
S102: acquiring an operating time parameter of the lighting device;
the power control method further includes:
S302: when the temperature of the lighting device is greater than or equal to the first temperature threshold or when the operating time of the lighting device exceeds a predetermined duration, controlling the central LED chip to operate at the first power level and controlling the peripheral LED chip to operate at the second power level.

In the present embodiment, the operating time parameter of the lighting device can also be acquired, and then the central LED chip and the peripheral LED chip can be controlled to operate according to the temperature parameter and the operating time parameter. The operating time parameter can be timed by a timer, by controlling the timer to start timing when the lighting device begins operation, when the timed duration exceeds the predetermined duration, the timer outputs a timing trigger signal. Therefore, when the temperature of the lighting device is greater than or equal to the first temperature threshold or when the operating time of the lighting device exceeds the predetermined duration, the central LED chip can be controlled to operate at the first power level and the peripheral LED chip can be controlled to operate at the second power level, thereby reducing the overall operating consumption of the light source. It should be understood that when the temperature of the lighting device is greater than or equal to the first temperature threshold, the service life of electronic components in the lighting device can be affected and there can be scalding risks of to users, therefore the central LED chip can be controlled to operate at the first power level and the peripheral LED chip can be controlled to operate at the second power level. When the operating time of the lighting device is too long, it can also cause the temperature of the lighting device to rise, thus similarly requiring control of the central LED chip at the first power level and the peripheral LED chip at the second power level. Accordingly, in the embodiment, the central LED chip can be controlled to operate at the first power level and the peripheral LED chip can be controlled to operate at the second power level under both conditions, reducing the overall operating consumption of the light source, thereby increasing an application scope and flexibility of the lighting device.

Referring to FIG. 3, in one embodiment, the power control method for the light source further includes the steps of:
S202: when the temperature of the lighting device is less than the first temperature threshold and the operating time of the lighting device exceeds the predetermined duration, controlling both the central LED chip and the peripheral LED chip to operate at the first power level.

In the present embodiment, the control priority based on the temperature parameter is higher than that based on the operating time parameter. Therefore, when the temperature of the lighting device is less than the first temperature threshold and the operating time of the lighting device exceeds the predetermined duration, both the central LED chip and the peripheral LED chip continue to be controlled to operate at the first power level.

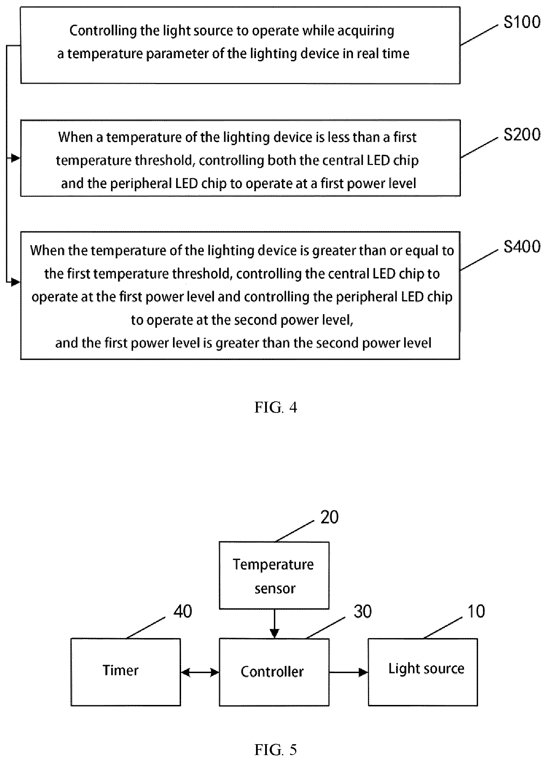

Referring to FIG. 4, in one embodiment, the power control method for the light source further includes the steps of:
S400: when the temperature of the lighting device is greater than or equal to the first temperature threshold, controlling the central LED chip to operate at a power level reduced by a first ratio, and controlling the peripheral LED chip to operate at a power level reduced by a second ratio, and the first ratio is less than the second ratio.

In the present embodiment, the power control method for the light source represents that in such cases where the temperature of the lighting device is excessively high, and merely reducing the power level of the peripheral LED chip is insufficient to reduce the temperature of the lighting device to a safe range. Therefore, it is necessary to control both the central LED chip and the peripheral LED chip to simultaneously reduce the operating power. It should be understood that a power reduction ratio of the central LED chip is smaller than that of the peripheral LED chip, which can maintain the central brightness or light intensity of the lighting device higher than the peripheral brightness, thereby ensuring throw lighting capability of the lighting device. In the embodiment, a temperature value of the first temperature threshold, the first power reduction ratio for the central LED chip, and the second power reduction ratio for the peripheral LED chip can all be configured according to actual conditions and user requirements. Thus, the control method for a light source in the embodiment can be applied to situations where the temperature rises excessively due to unexpected causes. When the temperature of the lighting device is greater than or equal to the first temperature threshold, a selection between controlling the central LED chip to operate at the first power level while controlling the peripheral LED chip to operate at the second power level, or controlling the central LED chip to operate at the first power level while controlling the peripheral LED chip to operate at the second power level, can be determined according to actual conditions and user requirements.

The present application further provides a lighting device based on the power control method for a light source described above.

Referring to FIG. 5, in one embodiment, the lighting device includes:
a housing formed with an accommodation cavity;
the light source 10 disposed within the housing, and the light source 10 includes the central LED chip and the peripheral LED chip;
the temperature sensor 20 disposed within the housing, configured to detect the temperature of the lighting device and output a temperature detection signal;
a controller 30 disposed within the housing, connected to the temperature sensor 20, and also connected to the light source 10, the controller 30 configured to, when determining that the temperature of the lighting device is less than the first temperature threshold based on the temperature detection signal, control both the central LED chip and the peripheral LED chip to operate at the first power level; and when determining that the temperature of the lighting device is greater than or equal to the first temperature threshold based on the temperature detection signal, control the central LED chip to operate at the first power level and control the peripheral LED chip to operate at the second power level, and the first power level is greater than the second power level.

In the present embodiment, the housing can serve to maintain a positional relationship between the light source 10, temperature sensor 20, and controller 30, with arrangements being determined according to actual requirements and user needs. The light source 10 can include the central LED chip and the peripheral LED chip, where LED chips represent semiconductor devices for light generation. A number and arrangement pattern of the LED chips can be configured based on practical circumstances and user preferences, for instance, the peripheral LED chips can be arranged surrounding the central LED chip. The temperature sensor 20 functions as a temperature measurement device, which can be implemented as a thermocouple, thermistor, infrared temperature sensor, or semiconductor temperature sensor, among others. The embodiment enables temperature monitoring of the lighting device housing through the temperature sensor 20. The controller 30 can be digital signal processors (DSP), programmable logic devices (PLD), field programmable gate arrays (FPGA), microprocessors, MCU microcontrollers, or other electronic components. The controller 30 can regulate the operating power of both the central LED chip and the peripheral LED chip according to the temperature detection signal received from the temperature sensor 20, such as reducing the power output of the LED chips when excessive temperatures are detected. When the lighting device temperature is less than the first temperature threshold, both the central LED chip and the peripheral LED chip can operate at the first power level. When the temperature is greater than or euqal to the first temperature threshold, the central LED chip can be controlled to operate at the first power level while the peripheral LED chip operates at the second power level, where the first power level exceeds the second. The first temperature threshold, first power level, and second power level can be established according to operational conditions and user specifications.

It should be understood that when the temperature of the lighting device is less than the first temperature threshold, the service life of electronic components in the lighting device will not be affected, nor will there be scalding risks to users. Therefore, the controller 30 can control both the central LED chip and the peripheral LED chip to operate at the relatively high first power level. When the lighting device temperature is grater than or equal to the first temperature threshold, this indicates that the current temperature can compromise the service life of electronic components and pose scalding risks to users, thus necessitating power reduction of the LED chips. In the embodiment, by maintaining the central LED chip operation at the first power level while reducing the peripheral LED chip to the lower second power level, the overall power consumption of light source 10 can be decreased, thereby reducing heat generation from light source 10. This approach preserves throw lighting intensity while reducing the overall power consumption to reduce the operating temperature of the lighting device. Accordingly, the lighting device in the embodiment can be implemented as various illumination products including flashlights, headlamps, searchlights, bicycle lights, camping lights, and spotlights.

In one embodiment, the controller 30 is further configured to control both the central LED chip and the peripheral LED chip to operate at the first power level, when determining that the temperature of the lighting device is less than the first temperature threshold based on the temperature detection signal or when receiving the high-power mode signal.

In the present embodiment, the controller 30 can additionally acquire the operating mode parameter of the lighting device and subsequently regulate operation of both the central LED chip and the peripheral LED chip based on the temperature parameter and the operating mode parameter. The operating mode can be manually switched by users or automatically switched through the predetermined program, whereupon the controller 30 reads the corresponding operating mode signal to determine the current operating mode of the lighting device. When the lighting device temperature is less than the first temperature threshold or when the operating mode corresponds to the high-power mode, both the central LED chip and the peripheral LED chip can be controlled to operate at the first power level. It should be understood that when the device temperature is less than the first temperature threshold, neither the service life of electronic components nor potential user scalding risks are affected, thereby permitting operation of all the LED chips at the higher first power level. During the high-power mode operation, controlling both the central LED chip and the peripheral LED chip at the higher first power level becomes necessary. Accordingly, in the embodiment, both the central LED chip and the peripheral LED chip can be controlled to operate at the relatively high first power level under two conditions, which can increase the application scope and flexibility of the lighting device.

Referring to FIG. 5, in one embodiment, the lighting device further includes:
a timer 40, connected to the controller 30, and the controller 30 is configured to, when the lighting device begins operation, control the timer 40 to start timing; and the timer 40 is configured to, when a timed duration reaches the predetermined time, output a timing trigger signal to the controller; and the controller is further configured to, when determining that the temperature of the lighting device is greater than or equal to the first temperature threshold according to the temperature detection signal or when receiving the timing trigger signal, control the central LED chip to operate at the first power level and control the peripheral LED chip to operate at the second power level.

In the present embodiment, the controller 30 can also acquire the operating time parameter of the lighting device through the timer 40, and then control the central LED chip and the peripheral LED chip to operate according to the temperature parameter and the operating time parameter. The operating time parameter can be timed by the timer 40. When the lighting device begins operation, the controller 30 can control the timer 40 to start timing, and when the timed duration exceeds the predetermined duration, the timer 40 can output the timing trigger signal to the controller 30. Therefore, when the temperature of the lighting device is greater than or equal to the first temperature threshold or when the operating time of the lighting device exceeds the predetermined duration, the controller 30 can control the central LED chip to operate at the first power level and control the peripheral LED chip to operate at the second power level, thereby reducing the overall operating consumption of the light source 10. It should be understood that when the temperature of the lighting device is greater than or equal to the first temperature threshold, the service life of electronic components in the lighting device can be affected and there can be scalding risks to users, therefore the central LED chip can be controlled to operate at the first power level and the peripheral LED chip can be controlled to operate at the second power level. When the operating time of the lighting device is too long, it can also cause the temperature of the lighting device to rise, thus similarly requiring control of the central LED chip at the first power level and the peripheral LED chip at the second power level. Accordingly, in the embodiment, the controller can control the central LED chip to operate at the first power level and the peripheral LED chip to operate at the second power level under both two conditions, thereby reducing the overall operating consumption of the light source 10 while increasing the application scope and flexibility of the lighting device.

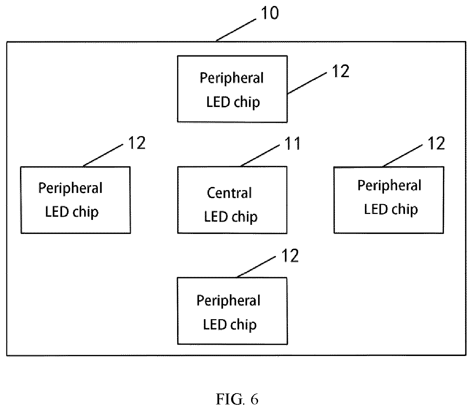

Referring to FIG. 6, in one embodiment, the peripheral LED chips 12 can be arranged surrounding the central LED chip 11.

In the present embodiment, a plurality of LED chips can be provided, the peripheral LED chips 12 are arranged in a circular pattern surrounding the central LED chip 11, or in a regular polygonal configuration surrounding the central LED chip 11, thereby ensuring uniform illumination from the light source 10. The number of both the peripheral LED chips 12 and the central LED chip 11 can be configured according to practical requirements and user needs.

The present application further provides a storage medium.

In one embodiment, the storage medium stores a power control program for the light source 10, and the power control program of the light source 10 can be executed by the controller 30 to implement the power control method for the light source 10 as described above. In the embodiment, the storage medium refers to physical equipment or materials used for storing data and information, and the storage medium can be a magnetic storage medium, solid-state storage medium, optical storage medium, or memory storage medium.

It should be understood that the application of the present application is not limited to the examples described above. For those skilled in the art, various modifications and variations can be made based on the above description, and all such modifications and variations should fall within the protection scope of the appended claims in the present application.

## Claims

1. A power control method for a light source, used to control a lighting device having a light source, wherein the light source comprises a central LED chip and a peripheral LED chip, the power control method for a light source comprises steps of:
controlling the light source to operate and acquiring a temperature parameter of the lighting device in real time;
when a temperature of the lighting device is less than a first temperature threshold, controlling both the central LED chip and the peripheral LED chip to operate at a first power level;
when the temperature of the lighting device is greater than or equal to the first temperature threshold, controlling the central LED chip to operate at the first power level and controlling the peripheral LED chip to operate at a second power level,
wherein the first power level is greater than the second power level.

2. The power control method for a light source according to claim 1, wherein the acquiring the temperature parameter of the lighting device further comprises:
acquiring an operating mode parameter of the lighting device;
the power control method for a light source further comprises steps of:
when the temperature of the lighting device is less than the first temperature threshold or when an operating mode of the lighting device is a high-power mode, controlling both the central LED chip and the peripheral LED chip to operate at the first power level.

3. The power control method for a light source according to claim 2, further comprising the steps of:
when the temperature of the lighting device is greater than or equal to the first temperature threshold and the operating mode of the lighting device is the high-power mode, controlling the central LED chip to operate at the first power level and controlling the peripheral LED chip to operate at the second power level.

4. The power control method for a light source according to claim 1, wherein the acquiring the temperature parameter of the lighting device further comprises:
acquiring an operating time parameter of the lighting device;
the power control method for a light source further comprises:
when the temperature of the lighting device is greater than or equal to the first temperature threshold or when an operating time of the lighting device exceeds a predetermined duration, controlling the central LED chip to operate at the first power level and controlling the peripheral LED chip to operate at the second power level.

5. The power control method for a light source according to claim 4, further comprising the steps of:
when the temperature of the lighting device is less than the first temperature threshold and the operating time of the lighting device exceeds the predetermined duration, controlling both the central LED chip and the peripheral LED chip to operate at the first power level.

6. The power control method for a light source according to claim 1, further comprising steps of:
when the temperature of the lighting device is greater than or equal to the first temperature threshold, controlling the central LED chip to operate at a power level reduced by a first ratio, and controlling the peripheral LED chip to operate at a power level reduced by a second ratio, wherein the first ratio is less than the second ratio.

7. A lighting device implementing the power control method according to any one of claims 1-6, comprising:
a housing, forming an accommodation cavity;
the light source, disposed within the housing, the light source comprises the central LED chip and the peripheral LED chip;
a temperature sensor, disposed within the housing, the temperature sensor is configured to detect the temperature of the lighting device and output a temperature detection signal;
a controller, disposed within the housing, connected to the temperature sensor, and also connected to the light source, the controller is configured to, when determining that the temperature of the lighting device is less than the first temperature threshold based on the temperature detection signal, control both the central LED chip and the peripheral LED chip to operate at the first power level; and is configured to, when determining that the temperature of the lighting device is greater than or equal to the first temperature threshold based on the temperature detection signal, control the central LED chip to operate at the first power level and control the peripheral LED chip to operate at the second power level, wherein the first power level is greater than the second power level.

8. The lighting device according to claim 7, wherein the controller is further configured to, when determining that the temperature of the lighting device is less than the first temperature threshold based on the temperature detection signal or when receiving a high-power mode signal, control both the central LED chip and the peripheral LED chip to operate at the first power level.

9. The lighting device according to claim 7, further comprising:
a timer connected to the controller, wherein the controller is configured to, when the lighting device begins operation, control the timer to start timing; and the timer is configured to, when a timed duration reaches the predetermined time, output a timing trigger signal to the controller; and the controller is further configured to, when determining that the temperature of the lighting device is greater than or equal to the first temperature threshold according to the temperature detection signal or when receiving the timing trigger signal, control the central LED chip to operate at the first power level and control the peripheral LED chip to operate at the second power level.

10. A storage medium, wherein the storage medium stores a power control program for a light source, the power control program for a light source is executed by the controller to perform the power control method for the light source according to any one of claims 1-5.
